# EUROPEAN PATENT APPLICATION

(11) **EP 3 587 942 A1**
(43) Date of publication of application: **01.01.2020**
(21) Application number: 19182683.3
(22) Date of filing: 26.06.2019
(51) Int. Cl.: F24F 3/16, B01D 46/00

(54) **FILTER CLEANING UNIT AND AIR CONDITIONER**

(30) Priority: 27.06.2018 JP 2018122247
(71) Applicant: Mitsubishi Heavy Industries Thermal Systems, Ltd., Tokyo 108-8215 (JP)
(72) Inventor: MATSUMOTO, Souichirou, Tokyo 108-8215 (JP)
(74) Representative: Cabinet Beau de Loménie

(57) **Abstract**

The present invention aims to prevent a collection box unit from moving with respect to an intake grille when lowering the intake grille, and to enable a collection box to move when the intake grille is placed at a predetermined position. A filter cleaning unit comprises: a brush fastening part (21) that stores a brush (17) placed along one direction of a filter; a drive mechanism that moves the brush fastening part (21) in a direction perpendicular to the one direction and along a surface of the filter; a collection box unit (38) that is placed on one surface side of an intake grille (11) and is moved together with the brush fastening part (21) by the drive mechanism; and an engagement part (46) that is placed on the collection box unit (38) and is capable of engaging with the intake grille (11), wherein, in a state in which the brush fastening part (21) is mounted above the collection box unit (38) and contacts the engagement part (46), the engagement part (46) is released from engagement with the intake grille (11), and, in a state in which the brush fastening part (21) is separated from the collection box unit (38) and the engagement part (46), the engagement part (46) is engaged with the intake grille (11).

## Description

### [Technical Field]

The present invention relates to a filter cleaning unit and an air conditioner.

### [Background Art]

Some indoor units of ceiling-embedded type air conditioners include a filter cleaning unit that uses a brush to clean dust and dirt sticking to a filter installed in an intake opening. The brush has a length equal to the width of the filter and is moved along one direction of the filter by a drive mechanism having a motor.

Patent Literature 1 below discloses a technology of removing dust and dirt sticking to a filter by a cleaning unit including a brush unit that moves along the filter and cleans the filter, and a drive unit that drives the brush unit.

### [Citation List]

### [Patent Literature]

[PTL 1]
Japanese Unexamined Patent Application, Publication No. 2016-8754

### [Summary of Invention]

### [Technical Problem]

Dust and dirt removed from the filter by a brush are collected in a collection box located under the brush. The collection box is moved together with a brush fastening part by a drive mechanism at the time of cleaning. There is also a case where the collection box is installed on a grille provided under the brush. Hence, when the grille is removed or lowered by a lift mechanism, the collection box can be lowered together with the grille.

In conventional cases, the collection box installed in the grille is slidably connected to one surface side of the grille, and, if the grille is inclined when lowering the grille, the collection box slides downward. Therefore, when the collection box collides with an end portion, there is a risk that a loud sound will be produced and the collected dust and dirt will scatter due to the impact.

The present invention has been made in view of such circumstances, and aims to provide a filter cleaning unit and an air conditioner that prevents a collection box unit from moving with respect to an intake grille when lowering the intake grille and enables a collection box to move when the intake grille is placed at a predetermined position.

### [Solution to Problem]

A filter cleaning unit according to a first aspect of the present invention comprises: a brush fastening part that stores a brush placed along one direction of a filter; a drive mechanism that moves the brush fastening part in a direction perpendicular to the one direction and along a surface of the filter; a collection box unit that is placed on one surface side of an intake grille and is moved together with the brush fastening part by the drive mechanism; and an engagement part that is placed on the collection box unit and is capable of engaging with the intake grille, wherein, in a state in which the brush fastening part is mounted above the collection box unit and contacts the engagement part, the engagement part is released from engagement with the intake grille, and, in a state in which the brush fastening part is separated from the collection box unit and the engagement part, the engagement part is engaged with the intake grille.

According to this configuration, the engagement part placed on the collection box unit is capable of engaging with the intake grille, and, when the brush fastening part is mounted above the collection box unit and contacts the engagement part, the engagement of the engagement part with the intake grille is released. In addition, when the brush fastening part is separated from the collection box unit and the engagement part, the engagement part is engaged with the intake grille. Hence, it is possible to prevent the collection box unit from moving with respect to the intake grille in the state in which the brush fastening part is separated from the collection box unit and the engagement part; that is, when lowering the intake grille. In the state in which the brush fastening part is mounted above the collection box unit and contacts the engagement part, that is; when the intake grille is placed at a predetermined position, the collection box can move.

In the above aspect, the engagement part may comprise: a pressed part that is placed substantially horizontally above the collection box unit, a protruding part that is formed integrally with the pressed part, protrudes downward relative to the pressed part, and is capable of engaging with a wall part of the intake grille; and an urging part that urges the protruding part downward, wherein, in a state in which the brush fastening part is mounted above the collection box unit and contacts the pressed part of the engagement part, the protruding part is moved upward and the engagement part is released from engagement with the intake grille, and, in a state in which the brush fastening part is separated from the collection box unit and the engagement part, the protruding part is moved downward by the urging part and the protruding part of the engagement part is engaged with the wall part of the intake grille.

According to this configuration, in the state in which the brush fastening part is separated from the collection box unit and the engagement part; that is, when lowering the intake grille, the protruding part is moved downward by the urging part. Hence, it is possible to prevent the collection box unit from moving with respect to the intake grille. In the state in which the brush fastening part is mounted above the collection box unit and contacts the engagement part; that is, when the intake grille is placed at a predetermined position in a case main body, the protruding part of the engagement part is moved upward. Thus, the collection box can move.

In the above aspect, the collection box unit may be slidably connected to the intake grille.

According to this configuration, when the intake grille is placed at the predetermined position and the brush fastening part is moved along the filter to clean the filter, the collection box unit also slides with respect to the intake grille placed parallel to the filter.

An air conditioner according to a second aspect of the present invention comprises the above-described filter cleaning unit.

### [Advantageous Effects of Invention]

According to the present invention, the collection box unit is prevented from moving with respect to the intake grille when lowering the intake grille and the collection box can move when the intake grille is placed at the predetermined position. Further, since the collection box unit is fixed to the intake grille, it is possible to pull out and detach the collection box without pushing the collection box unit.

### [Brief Description of Drawings]

FIG. 1 is a longitudinal sectional view showing an indoor unit of a ceiling-embedded type air conditioner according to one embodiment of the present invention.
FIG. 2 is a perspective view showing the indoor unit of the ceiling-embedded type air conditioner according to one embodiment of the present invention.
FIG. 3 is a longitudinal sectional view showing a filter cleaning unit according to one embodiment of the present invention.
FIG. 4 is a longitudinal sectional view showing the filter cleaning unit according to one embodiment of the present invention.
FIG. 5 is a perspective view showing an intake grille and a collection box unit according to one embodiment of the present invention.
FIG. 6 is a longitudinal sectional view showing the intake grille and the collection box unit according to one embodiment of the present invention.
FIG. 7 is a longitudinal sectional view showing the intake grille and the collection box unit according to one embodiment of the present invention.

### [Description of Embodiment]

Hereinafter, a ceiling-embedded type air conditioner according to one embodiment of the present invention will be described with reference to the drawings.

The ceiling-embedded type air conditioner (hereinafter referred to as the "air conditioner") includes an indoor unit 1, an outdoor unit (not shown), a refrigerant pipe (not shown) connecting the indoor unit 1 and the outdoor unit, and so on.

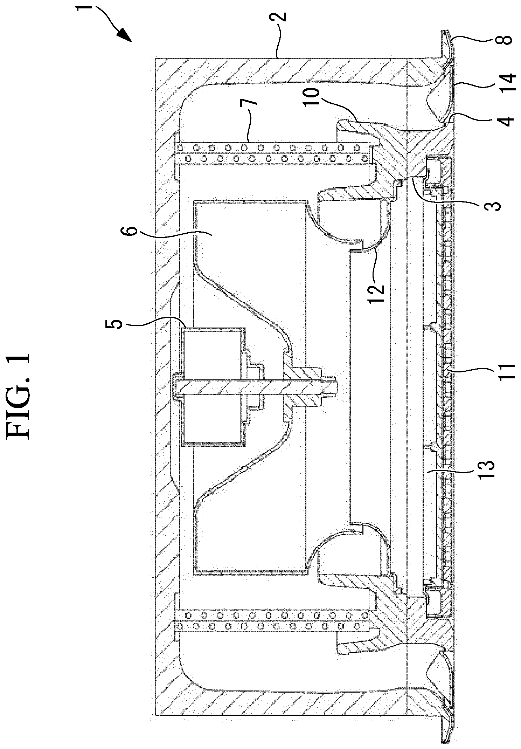

The indoor unit 1 is installed so that a case main body 2 is embedded in the ceiling. As shown in FIG. 1, the case main body 2 includes a heat exchanger 7, a drain pan 10, a motor 5, a fan 6, a bell mouth 12, etc. therein, and a panel part 8 to be exposed in the ceiling surface is attached to a lower section of the case main body 2.

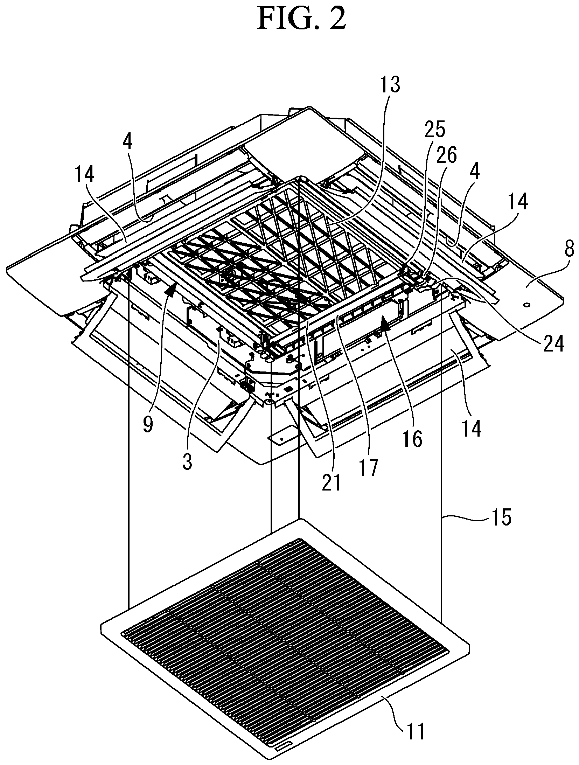

As shown in FIG. 1 and FIG. 2, an intake opening 3 is formed in a central section of a lower surface of the indoor unit 1, and a discharge opening 4 which is elongated in one direction along an outer peripheral section of the lower surface of the indoor unit 1 is formed at a position adjacent to the intake opening 3. In the intake opening 3, an intake grille 11 and a filter 13 above the intake grille 11 are installed. The drain pan 10 is installed under the heat exchanger 7 and receives drained water dripping from the heat exchanger 7. The bell mouth 12 is installed at a lower section of the drain pan 10.

When the air conditioner is operated, a refrigerant from the outdoor unit (not shown) circulates through the heat exchanger 7, and the fan 6 is driven by the motor 5. When the fan 6 is driven, room air passes from the intake opening 3 through the intake grille 11 and the filter 13 and is guided by the bell mouth 12 and drawn into the fan 6. The air discharged from the fan 6 is cooled or heated by passing through the heat exchanger 7, and then discharged from the discharge opening 4 into the room.

A louver 14 is elongated in one direction in conformity with the shape of the discharge opening 4, and the louver 14 is turned around an axis parallel to the longitudinal direction. Hence, an air flow discharged from the discharge opening 4 is directed upward or downward by changing the direction of the louver 14.

The filter 13 removes dust, dirt and the like contained in the drawn air. The filter 13 has a quadrangular shape like the intake opening 3, and is placed near the center of the intake opening 3. Moreover, at the four corners of a frame part of the intake grille 11, wires 15 that move up and down the intake grille 11 are placed.

The indoor unit 1 according to the present embodiment includes a filter cleaning unit 16. As shown in FIG. 2, on the lower surface of the filter 13, the filter cleaning unit 16 is installed on the panel part 8 and has a brush 17 which is equal to or longer than the length of one side of the filter 13 in one direction. The brush 17 of the filter cleaning unit 16 moves in contact with the surface of the filter 13 from a side at one end of the filter 13 to a side on the other end, thereby removing dust and dirt sticking to the filter 13. The filter cleaning unit 16 starts operating based on a control signal for operation control.

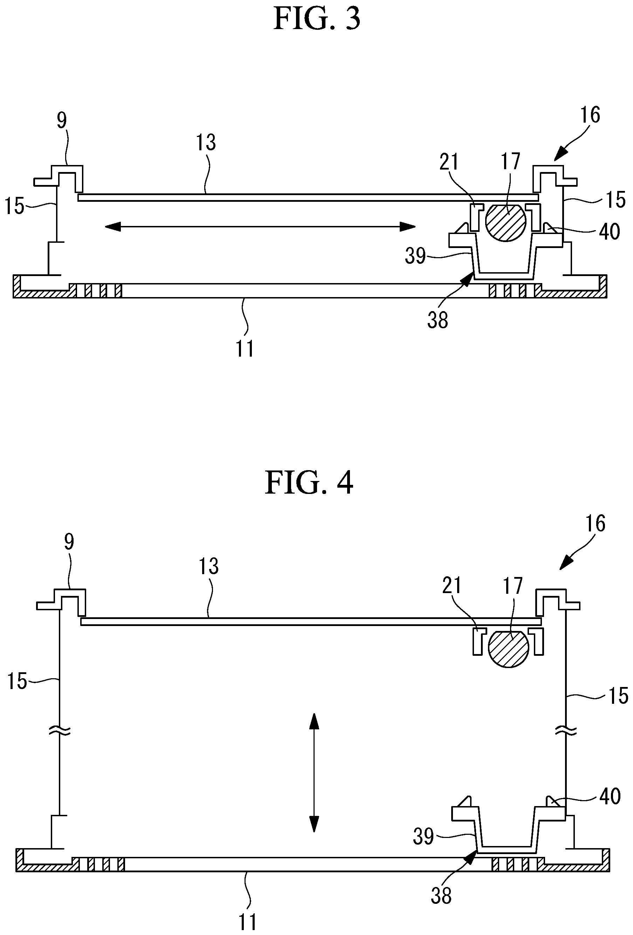

As shown in FIG. 2, the filter cleaning unit 16 includes a frame part 9 detachably installed on the panel part 8, the brush 17, a brush fastening part 21, a motor 24, etc. installed on the frame part 9, and a collection box unit 38 (see FIG. 3 and FIG. 4) placed on the intake grille 11.

The frame part 9 has a quadrangular shape like the intake opening 3, and is placed near the center of the intake opening 3. The filter 13 is installed on the frame part 9, and the frame part 9 is attachable to the panel part 8 and is detachable from the panel part 8.

The brush 17 has a shaft material elongated in one direction, and a large number of bristles arranged from one end to the other end in the axial direction on an outer circumferential surface of the shaft material. The brush 17 has a brush rotating gear (not shown) that engages with a pinion gear at each end. Further, the brush 17 is supported by the brush fastening part 21 at both ends.

As shown in FIG. 2, the brush fastening part 21 is a member elongated in a direction parallel to the axial direction of the brush 17, and stores the brush 17 therein. The brush fastening part 21 has a shape surrounding the brush 17 and exposes the brush 17 on the filter 13 side. A total of two pinion gears (not shown), one for each end section in the longitudinal direction of the brush fastening part 21, are rotatably mounted. The brush fastening part 21 is supported by rack gears (not shown) through the pinion gears. By moving the brush fastening part 21 along the rack gears, the brush fastening part 21 and the brush 17 move along the surface of the filter 13 from the side on one end of the filter 13 to the side on the other end.

Since the brush fastening part 21 is supported by the pinion gears and the rack gears on both sides in one direction of the filter 13, the brush fastening part 21 and the brush 17 move reliably.

The pinion gear is installed in each end section of the brush fastening part 21. The pinion gear engages with the rack gear. As the brush fastening part 21 moves, the pinion gear moves on the rack gear, and is driven and rotated by a force transmitted from the rack gear. The rack gear is installed on the outside of the filter 13 so that the axial direction is perpendicular to the axial direction of the brush 17. The length of the rack gear is equal to or longer than the length of one side of the filter 13.

One brush rotating gear is provided for each pinion gear, and engages with the pinion gear. As the pinion gear rotates, the brush rotating gear is driven and rotated by a force transmitted from the pinion gear. As a result, the brush 17 mounted on the brush rotating gears is rotated, and the brush 17 is rotated along with the movement of the brush 17.

The pinion gear is a member which is not connected to the motor 24 and operates in a driven manner. In the present embodiment, since the pinion gears are mounted on the brush fastening parts 21, unlike Patent Literature 1, a propulsion shaft connecting two pinion gears is not necessary.

As shown in FIG. 2, only one set of drive mechanism including the pinion gear, the rack gear, the motor 24, a shaft 25 and a nut 26 need to be placed along one side of the filter 13. The pinion gear, the rack gear, the motor 24, the shaft 25 and the nut 26 are one example of the drive mechanism.

The motor 24 is fixedly mounted on the frame part 9 of the filter cleaning unit 16. The motor 24 is connected to the shaft 25, and the shaft 25 rotates around the axis as the motor 24 is driven. The shaft 25 is a shaft material that is elongated in one direction and has a male thread formed on the outer circumferential surface of the shaft material, and engages with the nut 26. The shaft 25 is installed so that the axial direction is perpendicular to the axial direction of the brush 17; that is, the shaft 25 is installed in a direction parallel to the rack gear. The shaft 25 is equal to or longer than the length of one side of the filter 13 in one direction.

On the inner circumferential surface of the nut 26, a female thread, which engages with the male thread of the shaft 25, is formed. The nut 26 is connected to the brush fastening part 21 so as not to rotate around the axis of the shaft 25. Although the nut 26 is not fixed to the brush fastening part 21, the nut 26 is connected to the brush fastening part 21 so that the nut 26 can push the brush fastening part 21. Hence, as the shaft 25 rotates, the nut 26 moves, and the nut 26 pushes the brush fastening part 21 and moves along the axial direction of the shaft 25. By changing the rotation direction of the shaft 25, the advancing direction of the nut 26 and the brush fastening part 21 can be changed.

In the above-described example, an example in which the male thread is formed on the shaft 25 and the female thread is formed in the nut 26 and coupled together has been described, but the present invention is not limited to this example. For instance, the shaft 25 and the nut 26 may be configured to provide a ball screw mechanism with a combination of the shaft 25 and the nut 26.

In the present embodiment, only one motor 24 needs to be installed, and the brush 17 can be moved with a simple structure.

Next, the collection box unit 38 will be described with reference to FIG. 3 to FIG. 7.

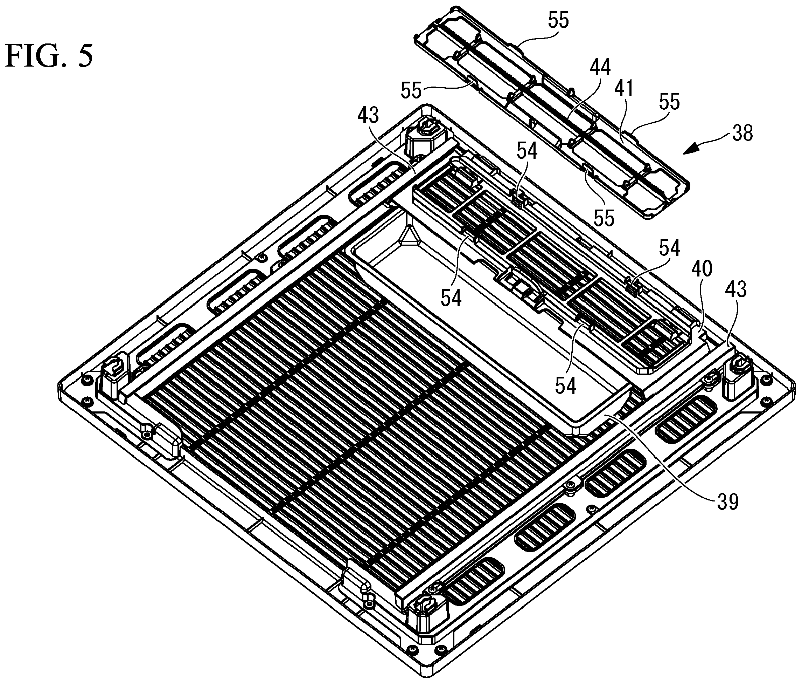

As shown in FIG. 3 and FIG. 4, the collection box unit 38 is placed on a surface of the intake grille 11 on the filter 13 side, and can be connected to the brush fastening part 21 located above the collection box unit 38. The collection box unit 38 is a member elongated in a direction parallel to the axial direction of the brush 17. As shown in FIG. 5, the collection box unit 38 includes a collection box 39, a support part 40, a comb part 41, etc.

When moving the brush 17 to clean the filter 13, the collection box unit 38 is connected to the brush fastening part 21 and is moved together with the brush fastening part 21 as shown in FIG. 3.

The collection box 39 is a box body in which dust and dirt removed by the brush 17 is stored, and has a length equal to or longer than the axial length of the brush 17 and a width longer than the diameter of the brush 17. The collection box 39 is placed between the support part 40 and the intake grille 11.

The support part 40 is placed above the collection box 39. The support part 40 has a quadrangular shape elongated in a direction parallel to the axial direction of the brush 17, and has a frame installed along the edge of an opening section of the collection box 39. Both end sections in the longitudinal direction of the support part 40 are slidably connected to rails 43 mounted on the intake grille 11. Thus, the collection box 39 is supported by the intake grille 11 through the support part 40.

In the state in which the support part 40 is being connected to the rails 43, the collection box 39 can be moved in a direction parallel to the in-plane direction of the intake grille 11 into and out from between the support part 40 and the intake grille 11.

The comb part 41 is placed above the support part 40, and is attachable to and detachable from the support part 40. The comb part 41 has a quadrangular shape elongated in a direction parallel to the axial direction of the brush 17, and has a frame installed along the edge of the support part 40. The support part 40 and the comb part 41 may be provided with locking parts 54 and 55 so as not to move the comb part 41 with respect to the support part 40.

A comb 44 elongated in a direction parallel to the axial direction of the brush 17 is formed at a central portion in the width direction of the comb part 41. A comb tip of the comb 44 protrudes on the brush 17 side; that is, the comb tip protrudes upward. In a state in which the brush fastening part 21 and the collection box unit 38 are connected, the comb 44 contacts the brush 17. When cleaning the filter 13 by the brush 17, the comb 44 contacts the brush 17 and scrapes off dust and dirt sticking to the brush 17. The scraped dust and dirt are collected in the collection box 39.

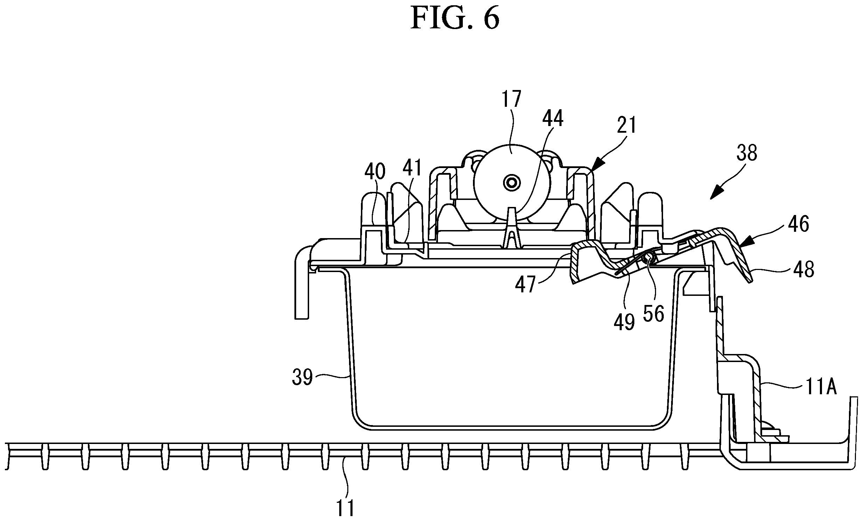

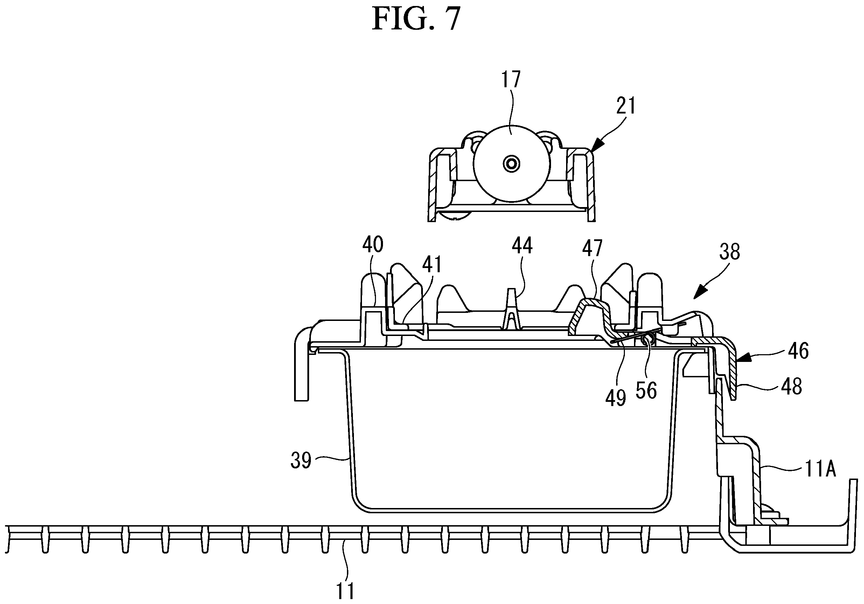

As shown in FIG. 6 to FIG. 7, an engagement part 46 is placed above the support part 40 of the collection box unit 38, and, as shown in FIG. 7, in a state in which the collection box unit 38 is located on one end side of the intake grille 11, the collection box unit 38 is engaged with the intake grille 11.

The engagement part 46 is connected to the support part 40 through a rotation shaft 56, and the engagement part 46 is pivotally supported with respect to the support part 40. The engagement part 46 has a pressed part 47 and a protruding part 48 which are integrally formed, and an urging part 49.

The pressed part 47 is placed above the collection box 39. The protruding part 48 protrudes downward relative to the pressed part 47 and is capable of engaging with a wall part 11A of the intake grille 11. The urging part 49 is a torsion spring and urges the protruding part 48 downward.

As shown in FIG. 6, when the brush fastening part 21 is mounted above the collection box 39, the lower surface of the brush fastening part 21 contacts the pressed part 47 of the engagement part 46, and the pressed part 47 is pressed by the brush fastening part 21. Consequently, the engagement part 46 pivots about the rotation shaft 56, and the protruding part 48 is moved upward. As a result, the engagement between the engagement part 46 and the intake grille 11 is released. Thus, in the state in which the brush fastening part 21 is mounted above the collection box unit 38 and contacts the engagement part 46; that is, when the intake grille 11 is placed at a predetermined position in the case main body 2, the collection box unit 38 can move.

On the other hand, as shown in FIG. 7, when the brush fastening part 21 is separated from the collection box 39 and the engagement part 46, the pressed part 47 is in the state of not being pressed by the brush fastening part 21, and therefore the protruding part 48 is moved downward by the urging part 49. At this time, the collection box unit 38 is positioned at an end portion of the intake grille 11, and the protruding part 48 of the engagement part 46 is engaged with the wall part 11A of the intake grille 11. Thus, in the state in which the brush fastening part 21 is separated from the collection box 39 and the engagement part 46; that is, when lowering the intake grille 11, it is possible to prevent the collection box unit 38 from moving with respect to the intake grille 11. Before the brush fastening part 21 is separated from the collection box 39 and the engagement part 46, the collection box unit 38 is definitely controlled to be positioned at the end portion of the intake grille 11 and moved.

In the present embodiment, when lowering the intake grille 11; that is, when the brush fastening part 21 is separated from the collection box 39 and the engagement part 46, the protruding part 48 of the engagement part 46 is in engagement with the wall part 11A of the intake grille 11. Therefore, even if the intake grille 11 is inclined, since the collection box unit 38 is fixed to the intake grille 11, the collection box unit 38 will not slide downward. As a result, the collection box 39 will not collide with an end on the lower side of the inclined intake grille 11, and there is no risk that a loud sound will be produced and the collected dust and dirt will scatter due to the impact.

When the intake grille 11 is lowered to discard dust and dirt stored in the collection box 39, the collection box 39 is detached from the intake grille 11. At this time, since the support part 40 of the collection box unit 38 is fixed to the intake grille 11 by the engagement part 46, the worker can pull out the collection box 39 and easily detach the collection box 39 without pushing the support part 40 of the collection box unit 38 by her/his hand.

Further, since the collection box unit 38 is fixed to the intake grille 11 only when the intake grille 11 is lowered, the collection box unit 38 is movable when the intake grille 11 is placed at a predetermined position of the panel part 8. Hence, when the brush fastening part 21 is moved to clean the filter 13, the collection box unit 38 is moved together with the brush fastening part 21 along the filter 13 and the intake grille 11.

### [Reference Signs List]

- 1: Indoor unit
- 2: Case main body
- 3: Intake opening
- 4: Discharge opening
- 8: Panel part
- 9: Frame part
- 11: Intake grille
- 11A: Wall part
- 13: Filter
- 14: Louver
- 15: Wire
- 16: Filter cleaning unit
- 17: Brush
- 21: Brush fastening part
- 24: Motor
- 25: Shaft
- 26: Nut
- 38: Collection box unit
- 39: Collection box
- 40: Support part
- 41: Comb part
- 43: Rail
- 44: Comb
- 46: Engagement part
- 47: Pressed part
- 48: Protruding part
- 49: Urging part
- 54: Locking part
- 55: Locking part
- 56: Rotation shaft

## Claims

1. A filter cleaning unit (16) comprising:
a brush fastening part (21) that stores a brush (17) placed along one direction of a filter (13);
a drive mechanism configured to move the brush fastening part (21) in a direction perpendicular to the one direction and along a surface of the filter (13);
a collection box unit (38) that is placed on one surface side of an intake grille (11) and configured to be moved together with the brush fastening part (21) by the drive mechanism; and
an engagement part (46) that is placed on the collection box unit (38) and is capable of engaging with the intake grille (11),
wherein, in a state in which the brush fastening part (21) is mounted above the collection box unit (38) and contacts the engagement part (46), the engagement part (46) is released from engagement with the intake grille (11), and, in a state in which the brush fastening part (21) is separated from the collection box unit (38) and the engagement part (46), the engagement part (46) is engaged with the intake grille (11).

2. The filter cleaning unit (16) according to claim 1, wherein the engagement part (46) comprises:
a pressed part (47) that is placed substantially horizontally above the collection box unit (38);
a protruding part (48) that is formed integrally with the pressed part (47), protrudes downward relative to the pressed part (47), and is capable of engaging with a wall part (11A) of the intake grille (11); and
an urging part (49) that urges the protruding part (48) downward, and
wherein, in a state in which the brush fastening part (21) is mounted above the collection box unit (38) and contacts the pressed part (47) of the engagement part (46), the protruding part (48) is moved upward and the engagement part (46) is released from engagement from the intake grille (11), and
in a state in which the brush fastening part (21) is separated from the collection box unit (38) and the engagement part (46), the protruding part (48) is moved downward by the urging part (49) and the protruding part (48) of the engagement part (46) is engaged with the wall part (11A) of the intake grille (11).

3. The air filter cleaning unit (16) according to claim 1 or 2, wherein the collection box unit (38) is slidably connected to the intake grille (11).

4. An air conditioner comprising the filter cleaning unit (16) according to any one of claims 1 to 3.
